# EUROPÄISCHE PATENTANMELDUNG

(11) **EP 1 757 390 A1**
(43) Veröffentlichungstag der Anmeldung: **28.02.2007**
(21) Anmeldenummer: 05018465.4
(22) Anmeldetag: 25.08.2005
(51) Int. Cl.: B23B 31/18, B23B 33/00

(54) **Wellenspannfutter**

(71) Anmelder: SMW-AUTOBLOK Spannsysteme GmbH, 88074 Meckenbeuren (DE)
(72) Erfinder: Helm, Peter, 88074 Meckenbeuren (DE); Beig, Werner, 88124 Ravensburg (DE)
(74) Vertreter: Engelhardt, Guido

(57) **Zusammenfassung**

Bei einem Wellenspannfutter (1) zur Einspannung eines Werkstückes (10) mittels eines Stirnmitnehmers (17) und/oder in einem den Stirnmitnehmer (17) umgebenden Backenträger (21) eingesetzten Spannbacken (26), wobei diese durch eine Servoeinrichtung (3) betätigbar sind und der Backenträger (21) relativ zu dem Stirnmitnehmer (17) begrenzt axial verstellbar ist, sind die Spannbacken (26) verschwenkbar in dem Backenträger (21) gelagert und durch einen mit Steuerkurzen (41, 42) versehenen Ringkolben (31) betätigbar, der über Zwischenglieder (44) mit der Servoeinrichtung (3) in Triebverbindung steht. Außerdem ist der Ringkolben 31 zur Selbstzentrierung der Spannbacken (26) in dem Backenträger (21) axial verschiebbar geführt, oder zur ausgleichenden Einspannung eines Werkstückes (10) radial schwimmend abgestützt.

Durch diese Ausgestaltung wird erreicht, dass kein Schmutz in den Backenträger (21) gelangen kann und dass die Spannbacken (26) durch seitlich auf diese einwirkende Kippmomente nicht verklemmt werden. Die Spannbacken (26) werden vielmehr zentrisch angetrieben und die axiale Verstellbewegung wird durch Verschwenken gelenkig gelagerter Grundbacken (27) in eine radiale Zustellbewegung umgelenkt. Außerdem ist je nach Ausgestaltung der Lagerflächen des Ringkolbens (31) eine zentrische oder selbstzentrierende Spannung möglich, so dass bei hoher Steifigkeit das Wellenspannfutter (1) vielseitig einsetzba ist.

## Beschreibung

Die Erfindung bezieht sich auf ein Wellenspannfutter zur Einspannung eines Werkstückes mittels eines Stirnmitnehmers und/oder radial verstellbarer in einem den Stirnmitnehmer umgebenden Backenträger eingesetzten Spannbacken, wobei die Spannbacken durch eine Servoeinrichtung betätigbar sind und der Backenträger relativ zu dem Stirnmitnehmer begrenzt axial verstellbar ist.

Ein derartiges Spannfutter, das sich in der Praxis gut bewährt hat, wird von der SMW-Autoblok Spannsysteme GmbH, 88070 Meckenbeuren, unter der Bezeichnung KRS-NZ angeboten. Zur Umlenkung der mittels der Servoeinrichtung erzeugten axialen Verstellbewegungen einer Zugstange in eine radial gerichtete Spannbewegung der Spannbacken sind hierbei in dem Backenträger Keilstangen eingebaut, die seitlich neben den Spannbacken angeordnet, mit der Zugstange fest verbunden und über Schrägverzahnungen mit den Spannbacken in Triebverbindung stehen.

Abgesehen davon, dass durch die unsymmetrische Anordnung der Keilstangen die Spannbacken durch hohe Kippmomente belastet und somit in den Backenführungen verklemmt werden, treten bei diesem Spannfutter auch hohe Reibungskräfte auf, durch die der Wirkungsgrad des Spannfutters erheblich beeinträchtigt wird. Des Weiteren ist bei dieser Ausgestaltung von Nachteil, dass mittels der Spannbacken, da diese gleichmäßig verstellt werden, nur eine zentrische Einspannung eines Werkstückes möglich ist, und dass die Stirnseite des Backenträgers nicht hinreichend abgedichtet werden kann. Die Backenführungen und die ineinandergreifenden Verzahnungen der Keilstangen und der Spannbacken können demnach schon nach kurzer Zeit verschmutzen, Betriebsstörungen sind aufgrund dessen oftmals die Folge.

Aufgabe der Erfindung ist es daher, ein Wellenspannfutter der vorgenannten Gattung in der Weise auszubilden, dass ein Werkstück nicht nur zentrisch, sondern auch ausgleichend einzuspannen ist und dass dessen Spannbacken zentrisch angetrieben werden können, so dass keine Kippkräfte in Kauf zu nehmen sind. Vor allem aber soll erreicht werden, dass der Backenträger eine geschlossene Einheit bildet, so dass kein Schmutz in das Innere des Spannfutters gelangen kann und dadurch bedingte Betriebsstörungen nicht auftreten.

Gemäß der Erfindung wird dies bei einem Wellenspannfutter der vorgenannten Art dadurch erreicht, dass die Spannbacken verschwenkbar in dem Backenträger gelagert und durch einen mit einer oder zwei Steuerkurven versehenen Ringkolben betätigbar sind, der über Zwischenglieder mit der den Spannbacken zugeordneten Servoeinrichtung in Triebverbindung steht, und dass der Ringkolben zur Selbstzentrierung der Spannbacken in dem Backenträger axial verschiebbar geführt oder zur ausgleichenden Einspannung eines Werkstückes radial schwimmend abgestützt ist.

Zweckmäßig ist es hier, den Backenträger auf einem ortsfest an einer Werkzeugmaschine anbringbaren Gehäuse axial begrenzt verschiebbar zu lagern, in dem zentrisch der Stirnmitnehmer angeordnet ist.

Zur radial schwimmenden Lagerung des Ringkolben sollte dieser zwischen zwei, z.B. durch Distanzhülsen, mit Abstand zueinander angeordnete Führungsscheiben eingesetzt sein, die fest miteinander verbunden sind, und die dem Ringkolben zugeordnete Lagerfläche des Backenträgers sollte im Bereich der der Spannstellung der Spannbacken entsprechenden Lage des Ringkolbens mit einer umlaufenden Freisparung zu dessen exzentrischer Anordnung versehen sein.

Die der Servoeinrichtung zugewandte Führungsscheibe sollte hierbei vorzugsweise über an dieser angeformte Vorsprünge fest an einem mit der Servoeinrichtung verbundenen Zwischenglied angebracht sein und zwischen dem Ringkolben und einer oder beiden Führungsscheiben sollte jeweils mindestens eine Gleitscheibe eingesetzt sein

Um einen geschlossenen Backenträger zu ermöglichen, sollten die Spannbacken aus in Ausnehmungen des Backenträgers eingesetzten, jeweils mittels eines an diesem abgestützten Gelenkbolzens verschwenkbar gelagerten Grundbacken und an diesen auswechselbar befestigten Aufsatzbacken bestehen, wobei an den freien Enden der Grundbacken jeweils ein Gleitstück verdrehbar angebracht sein sollte, das mit einer oder zwei an dem Ringkolben vorgesehenen Steuerkurven oder Schrägflächen zusammenwirkt.

Des Weiteren sollten die Aufsatzbacken an einer von der Stirnfläche der Grundbacken abstehenden Schulter abgestützt sein und zur Rückführung der Spannbacken sollten in dem Backenträger auf die Grundbacken mit Abstand zu dem diese tragenden Gelenkbolzen eingesetzte Druckfedern einwirken oder es kann an dem Ringkolben eine dem Gleitstück zugeordnete Steuerkurve oder Schrägfläche angearbeitet werden.

Auf diese Weise ist es möglich, die die Grundbacken aufnehmenden Ausnehmungen des Backenträgers durch eine oder mehrere zwischen diesem und den Grundbacken eingesetzte Dichtungen, z.B. in Form eines Faltenbalges dicht zu verschließen.

Des Weiteren ist es angebracht, den Backenträger über mehrere vorgespannte Druckfedern an dem mit der Werkzeugmaschine verbundenen Gehäuse abzustützen und durch die Kraft der Druckfedern beim Auslösen eines Spannvorganges begrenzt zu verstellen. Der Backenträger wird somit selbsttätig in die Spannstellung verschoben.

Zur selbsttätigen Rückführung des Backenträgers beim Öffnen der Spannbacken ist ferner vorgesehen, zwischen dem Ringkolben und dem Backenträger mehrere Druckfedern einzusetzen, die an der den Spannbacken zugewandten Führungsscheibe des Ringkolbens und dem Backenträger abgestützt und in Spannstellung der Spannbacken vorgespannt sind. Dadurch werden die Spannbacken bei Beendigung eines Spannvorganges sofort abgehoben und zurückgestellt, Beschädigungen an dem Werkstück und/oder dem Stirnmitnehmer werden auf diese Weise zuverlässig vermieden.

Auch sollte der Ringkolben bei dessen Rückführung vorzugsweise mit Hilfe eines radial gerichteten Stiftes mit dem Backenträger formschlüssig verbunden und drehfest an dem Backenträger abgestützt sein, wobei mittels des in den Backenträger eingesetzten radial gerichteten Stiftes, der in eine in der der Servoeinrichtung zugekehrten Führungsscheibe eingearbeiteten Längsnut eingreift, dies leicht bewerkstelligt werden kann. Es ist aber auch möglich, den Ringkolben durch das Zwischenglied, das in Führungsschlitzen des Trägers abgestützt ist, drehfest mit dem Gehäuse zu verbinden.

Angezeigt ist es auch, die Verstellwege des Backenträgers und/oder der auf den Ringkolben einwirkenden Servoeinrichtung durch Anschläge zu begrenzen und den Stirnmitnehmer lageorientiert in dem Gehäuse des Gehäuses einzusetzen.

Aufgrund der vorgesehenen Ausgestaltung ist es möglich, den von dem Gehäuse und dem Backenträger eingeschlossenen Innenraum des Wellenspannfutters ganz oder teilweise mit Schmiermittel zu befüllen, so dass stets eine ausreichende Schmierung aller bewegten Bauteile gewährleistet ist.

Wird ein Wellenspannfutter gemäß der Erfindung ausgebildet, so ist trotz des geringen Bauaufwandes gewährleistet, dass kein Schmutz in den Backenträger gelangen kann und dass die Spannbacken durch seitlich auf diese einwirkende Kippmomente in den Backenführungen nicht verklemmt werden. Die Spannbacken werden vielmehr zentrisch angetrieben, und die axiale Verstellbewegung wird durch Verschwenken der gelenkig gelagerten Grundbacken in eine radial gerichtete Zustellbewegung umgelenkt. Außerdem ist je nach Ausgestaltung der Lagerfläche des Ringkolbens auf dem diesen tragenden Bauteil eine zentrische oder eine selbstzentrierende Spannung möglich, so dass das vorschlagsgemäß ausgebildete Wellenspannfutter, zumal eine hohe Steifigkeit gegeben ist, in vielseitiger Weise einsetzbar und bei langer Lebensdauer nahezu wartungsfrei ist und einen störungsfreien Betrieb gewährleistet.

In der Zeichnung ist ein gemäß der Erfindung ausgebildetes Wellenspannfutter dargestellt, das nachfolgend im Einzelnen erläutert ist. Hierbei zeigt, jeweils in in den einzelnen Hälften unterschiedlichen Axialschnitten
- Figur 1: das Wellenspannfutter in Spannstellung und
- Figur 2: das Wellenspannfutter nach Figur 1 mit geöffneten Spannbacken.

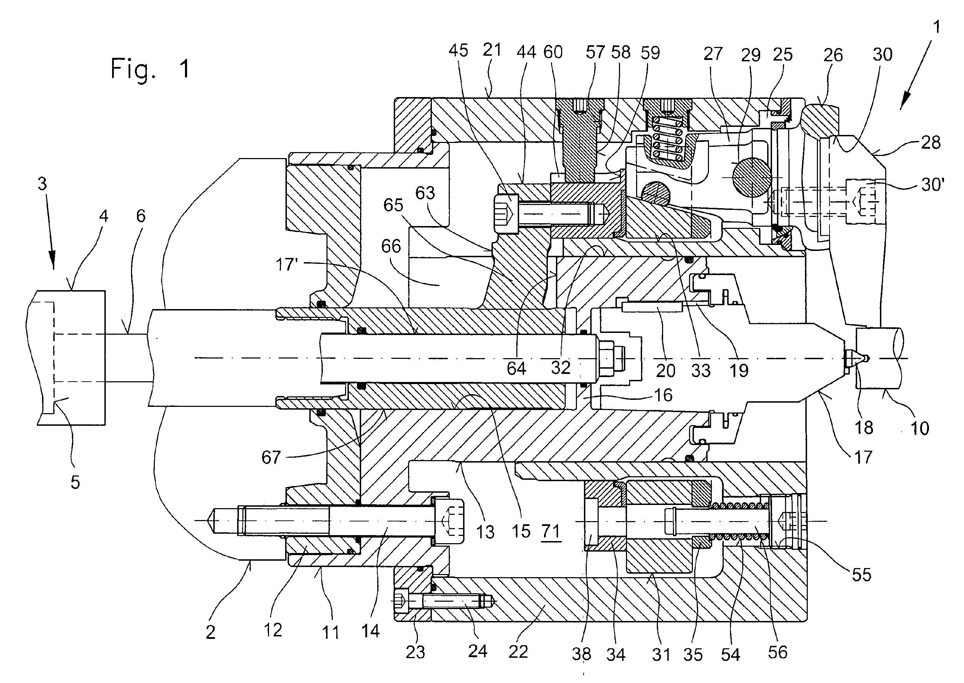

Das in Figur 1 dargestellte und mit 1 bezeichnete Wellenspannfutter dient zur Einspannung eines zu bearbeitenden Werkstückes 10 mittels eines Stirnmitnehmers 17 und/oder mittels in einen diesen umgebenden Backenträger 21 eingesetzten Spannbacken 26. Zur Betätigung der Spannbacken 26 ist eine schematisch verkleinert wiedergegebene Servoeinrichtung 3 vorgesehen, die aus einem in einem Zylinder 4 angeordneten Kolben 5 besteht und dessen Kolbenstange 6 trieblich mit den Spannbacken 26 verbunden ist.

Der Backenträger 21 ist begrenzt axial verschiebbar auf einem Gehäuse 11 gelagert, das aus einem mittels Schrauben 14 an der Werkzeugmaschine 2 befestigten Flansch 12 und einem den Backenträger 21 abstützenden Träger 13 zusammengesetzt ist. Die Schrauben 14 durchgreifen hierbei auch den Träger 13, so dass dieser mit dem Flansch 12 eine Baueinheit bildet. In einer zentrisch in den Flansch 12 und den Träger 13 eingearbeiteten Bohrung 15 ist des Weiteren ein Verbindungsrohr 67 gelagert, das durch die Servoeinrichtung 3 verstellbar ist.

Der Backenträger 21 weist ein ringförmiges Gehäuse 22 auf, das mit einem Anschlagring 23, der mittels Schrauben 24 an dem Gehäuse 22 befestigt ist, versehen ist. Des Weiteren sind in gleichmäßig über den Umfang verteilt angeordneten, z.B. um 120° zueinander versetzten Ausnehmungen 25 die Spannbacken 26 eingesetzt, die jeweils aus einem Grundbacken 27 und einem Aufsatzbacken 28 bestehen. Die Grundbacken 27 sind hierbei mit Hilfe von Gelenkbolzen 29, die in dem Backenträger 21 gelagert sind, verschwenkbar gehalten, und an deren dem Werkstück 10 zugekehrten Stirnflächen sind an bogenförmig gestalteten Schultern 30 die Aufsatzbacken 28, die mittels Schrauben 30' an den Grundbacken befestigt sind, abgestützt.

Zur Betätigung der Spannbacken 26 ist ein Ringkolben 31 vorgesehen, der verschiebbar in dem U-förmig gestalteten Backenträger 21 angeordnet ist und mit dem Verbindungsrohr 67 in Triebverbindung steht. Dies wird mittels eines dreiarmigen Zwischengliedes 44 bewerkstelligt, dessen Arme 645 in den Backenträger 21 eingearbeitete Führungsschlitze 66 durchgreifen und an dem Verbindungsrohr 67 angeformt sind.

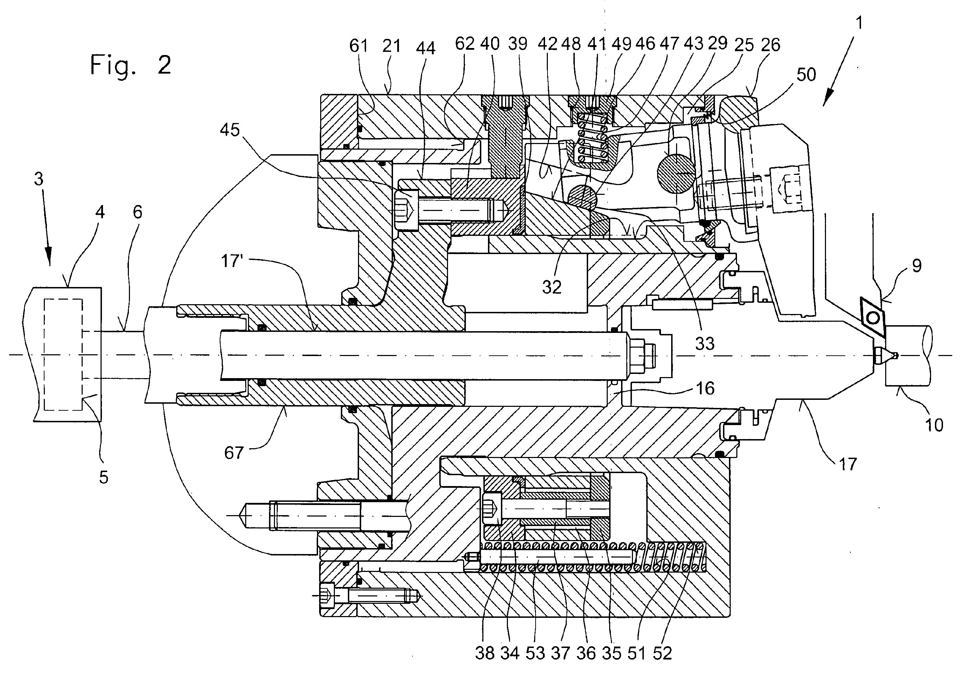

Der Ringkolben 31 ist bei dem gezeigten Ausführungsbeispiel schwimmend gelagert, um bei einem eventuell unrund geformten Werkstück 10 selbsttätig eine ausgleichende Einspannung zu ermöglichen. Dies wird mit Hilfe einer bereichsweise, d.h. im Bereich der Spannstellung der Spannbacken 26, in die Lagerfläche 32 des Ringkolbens 31 auf dem Backenträger 21 eingearbeiteten Freisparung 33 bewerkstelligt. Wird jedoch die Freisparung 33 nicht vorgesehen, und erstreckt sich die Lagerfläche 32 , wie dies strichpunktiert in Figur 2 eingezeichnet ist, über den gesamten Verstellbereich des Ringkolbens 31, wird das Werkstück 10 mittels der Spannbacken 26 zentrisch eingespannt.

Um eine radiale Einstellung des Ringkolbens 31 zu ermöglichen, ist dieser zwischen zwei Führungsscheiben 34 und 35 verstellbar angeordnet, die mittels Ausnehmungen 36 durchgreifender Schrauben 38 miteinander verbunden sind. Damit ein vorgegebener Abstand eingehalten wird, sind die Führungsscheiben 34 und 35 über Distanzhülsen 37 aneinander abgestützt. Außerdem ist zwischen dem Ringkolben 31 und der Führungsscheibe 34 eine Gleitscheibe 39, um die Reibung zu mindern, eingesetzt und an der Führungsscheibe 34 sind Vorsprünge 40 angeformt, an denen mittels Schrauben 45 das Zwischenglied 44 befestigt ist.

Der Ringkolben 31 ist des Weiteren mit den Spannbacken 26 zugeordneten Steuerkurven 41 und 42 , z.B. in Form von Schrägflächen, ausgestattet, und an den Grundbacken 27 sind Gleitstücke 43 verdrehbar gehalten, die zum Einspannen des Werkstückes 10 mittels der Spannbacken 26 mit den Steuerkurven 41 und zum Öffnen der Spannbacken 26 mit den Steuerkurven 42 zusammenwirken. Die Spannbacken 26 werden dabei jeweils um die Glenkbolzen 29 verschwenkt, so dass die Aufsatzbacken 28 in Richtung des Werkstückes 10 bzw. von diesem weg verstellt werden.

Die Rückstellbewegung der Spannbacken 46 wird dabei unterstützt durch Druckfedern 46, die auf die Grundbacken 27 einwirken. Dazu sind in die Grundbacken 27 Ausnehmungen 47 eingearbeitet und in Ausnehmung 48, die in den Backenträger 21 eingearbeitet sind, sind Stopfen 49 eingeschraubt, an denen sich die Druckfedern 46 abstützen.

Die die Spannbacken 26 aufnehmenden Ausnehmungen 25 des Backenträgers 21 sind durch als Faltenbälge ausgebildete Dichtungen 50 verschlossen, der Innenraum 71 des Wellenspannfutters 1 kann somit ganz oder teilweise mit Schmiermittel gefüllt werden, so dass stets eine ausreichende Schmierung an allen Lagerflächen gewährleistet ist.

Der Backenträger 21 ist, wie dies in der unteren Hälfte der Figur 2 dargestellt ist, über mehrere Druckfedern 51 an dem Träger 13 des ortsfesten Gehäuses 11 abgestützt. Dazu sind in den Backenträger 21 Bohrungen 52 eingearbeitet und der Träger 13 ist mit abstehenden Stiften 53 versehen, durch die die Druckfedern 51 geführt sind. Wird ein Spannvorgang ausgelöst, indem der Ringkolben 31 aus der in Figur 2 gezeigten Lage nach rechts bis in die in Figur 1 dargestellte Lage verschoben wird, so wird der Backenträger 21 selbsttätig durch die Kraft der Druckfedern 51 in diese Betriebsstellung verschoben.

Gemäß der unteren Hälfte der Figur 1 sind an dem Backenträger 21 weitere Druckfedern 54 abgestützt, die auf den Ringkolben 31 einwirken. In Bohrungen 55 des Backenträgers 21 sind dazu Stifte 56 eingeschraubt, durch die die an der Führungsscheibe 35 anliegenden Druckfedern 54 geführt sind. Durch die Zustellung des Ringkolbens 31 werden die Druckfedern 54 gespannt, der Backenträger 21 ist dadurch in der in Figur 2 gezeigten Lage fixiert.

In den Backenträger 21 sind ferner radial gerichtete Stifte 58 in Gewindebohrungen 57 eingeschraubt, die mit einem an dem Zwischenglied 44 vorgesehenen Anschlag 59 zusammenwirken und durch die das Zwischenglied 44, da die Stifte 58 in axial gerichtete Nuten 60 eingreifen, drehfest abgestützt ist. Auch durch die Arme des Zwischengliedes 44, die die in den Träger 13 angearbeiteten Führungsschlitze 66 durchgreifen, ist eine drehfeste Abstützung des Ringkolbens 31 gewährleistet.

Außerdem ist an dem Zwischenglied 44 ein mit dem Flansch 12 zusammenwirkender Anschlag 63 und an dem Träger 13 ein mit dem Zwischenglied 44 zusammenwirkender Anschlag 64 vorgesehen, durch die der Verstellweg des Kolbens 5 der Servoeinrichtung 3 begrenzt ist. Durch weitere an dem Backenträger 21 und dem Flansch 12 angearbeitete Anschläge 61 bzw. 62 ist der Verstellbereich des Backenträgers 21 ebenfalls begrenzt.

Nach Figur 2 wird das Werkstück 10 durch den Stirnmitnehmer 17 gehalten. Dessen Spitze greift hierbei in eine in dem Werkstück 10 eingearbeitete Einsenkung ein und durch nicht dargestellte Messer wird das Werkstück 10 von dem rotierend antreibbaren Stirnmitnehmer 17 mitgenommen. Mit Hilfe eines Werkzeuges 9 kann somit auch die Stirnfläche des Werkstückes 10 bearbeitet werden.

In einem an dem Träger 13 angeformten Steg 16 ist das Antriebsglied 17' des Stirnmitnehmers 17 geführt. Außerdem ist der Stirnmitnehmer lageorientiert in dem Träger 13 eingesetzt. Dazu dient eine in den Träger 13 eingearbeitete Längsnut 19 und eine in diese und den Stirnmitnehmer 17 eingreifende Feder 20.

Ist das Werkstück 10 gemäß Figur 1 mittels der Spannbacken 26 einzuspannen, so ist das Zwischenglied 44 durch Betätigen der Servoeinrichtung 3 nach rechts zu verschieben. Sobald der Stift 58 von dem Anschlag 59 gelöst wird, wird der Backenträger 21 und mit diesem werden die Spannbacken 26 durch die Kraft der gespannten Druckfeder 51 der Verstellbewegung des Zwischengliedes 44 und des mit diesem fest verbundenen Ringkolbens 31 folgend nach rechts verschoben, und zwar so lange, bis der Anschlag 61 des Backenträgers 21 an dem Anschlag 62 des Flansches 12 anliegt. Die Aufsatzbacken 28 befinden sich in dieser Betriebsstellung in geöffneter Lage über dem Werkstück 10.

Wird der Ringkolben 31 mittels der Servoeinrichtung 3 weiter nach rechts bewegt - der Abstand zwischen dem Stift 58 und dem Anschlag 59 entspricht dem Spannhub der Spannbacken 26 -, wird durch die Steuerkurve 42 das Gleitstück 43 nach außen gedrückt, die Grundbacken 27 werden dadurch um die Gelenkbolzen 29 geschwenkt und die Aufsatzbacken 28 werden gegen das Werkstück 10 gedrückt, so dass dieses eingespannt ist. Ist die Oberfläche des Werkstückes 10 unrund, wird selbsttätig ein Ausgleich vorgenommen, indem der schwimmend gelagerte Ringkolben 31 mehr oder weniger exzentrisch in die Ausnehmung 33 ausweicht, die Aufsatzbacken 28 werden somit unterschiedlich in Richtung des Werkstückes 10 zugestellt.

Bei der Verstellung des Ringkolbens 21 sind die Druckfedern 54 vorgespannt worden. Der Backenträger 21, an dem auch die Druckfedern 54 abgestützt sind, wird somit unverändert in Spannstellung gehalten. Wird die Spannstellung des Wellenspannfutters 1 beendet, indem der Ringkolben 31 mit Hilfe der mit diesem trieblich verbundenen Servoeinrichtung 3 in der in Figur 1 gezeigten Lage nach links verschoben wird, so wird der Ringkolben 31 durch die Kraft der Federn 54 sofort gegen die Steuerkurve 42 gedrückt, so dass die Spannbacken 26, auch durch die Kraft der Druckfedern 46, von dem Werkstück 10 abgehoben werden. Sobald der Anschlag 59 an dem Stift 58 anliegt, wird der Backenträger 21 von dem Zwischenglied 44 mitgenommen und ebenfalls nach links bis in die in Figur 2 dargestellte Endlage verschoben. Das bearbeitete Werkstück 10 kann in dieser Betriebsstellung des Wellenspannfutters 1 durch Öffnen eines nicht gezeigten Reitstockes von dem Stirnmitnehmer 17 abgenommen und es kann erneut ein Werkstück eingesetzt werden.

## Patentansprüche

1. Wellenspannfutter (1) zur Einspannung eines Werkstückes (10) mittels eines axial zustellbaren Stirnmitnehmers (17) und/oder radial verstellbarer in einem den Stirnmitnehmer (17) umgebenden Backenträger (21) eingesetzten Spannbacken (26), wobei die Spannbacken (26) durch eine Servoeinrichtung (3) betätigbar sind und der Backenträger (21) relativ zu dem Stirnmitnehmer (17) begrenzt axial verstellbar ist,
**dadurch gekennzeichnet,**
**dass** die Spannbacken (26) verschwenkbar in dem Backenträger (21) gelagert und durch einen mit einer oder zwei Steuerkurven (41, 42) versehenen Ringkolben (31) betätigbar sind, der über Zwischenglieder(44) mit der den Spannbacken (26) zugeordneten Servoeinrichtung (3) in Triebverbindung steht, und dass der Ringkolben (31) zur Selbstzentrierung der Spannbacken (26) in dem Backenträger (21) axial verschiebbar geführt oder zur ausgleichenden Einspannung eines Werkstückes (10) radial schwimmend abgestützt ist.

2. Wellenspannfutter nach Anspruch 1,
**dadurch gekennzeichnet,**
**dass** der Backenträger (21) auf einem ortsfest an einer Werkzeugmaschine (2) anbringbaren Gehäuse (11) axial begrenzt verschiebbar gelagert ist, in dem zentrisch der Stirnmitnehmer (16) angeordnet ist.

3. Wellenspannfutter nach Anspruch 1 oder 2
**dadurch gekennzeichnet,**
**dass** zur radial schwimmenden Lagerung des Ringkolben (31) dieser zwischen zwei, z.B. durch Distanzhülsen (27), mit Abstand zueinander angeordnete Führungsscheiben (34, 35) eingesetzt ist, die fest miteinander verbunden sind, und dass die dem Ringkolben (31) zugeordnete Lagerfläche (32) des Backenträgers (31) im Bereich der der Spannstellung der Spannbacken (26) entsprechenden Lage des Ringkolbens (31) mit einer umlaufenden Freisparung (33) zu dessen exzentrischer Anordnung versehen ist.

4. Wellenspannfutter nach Anspruch 3,
**dadurch gekennzeichnet,**
**dass** die der Servoeinrichtung (3) zugewandte Führungsscheibe (34) vorzugsweise über an dieser angeformte Vorsprünge (40) fest an einem mit der Servoeinrichtung (3) verbundenen Zwischenglied (44) angebracht ist.

5. Wellenspannfutter nach Anspruch 3 oder 4,
**dadurch gekennzeichnet,**
**dass** zwischen dem Ringkolben (31) und einer oder beiden Führungsscheiben (34, 35) jeweils mindestens eine Gleitscheibe (39) eingesetzt ist.

6. Wellenspannfutter nach einem oder mehreren der Ansprüche 1 bis 5,
**dadurch gekennzeichnet,**
**dass** die Spannbacken (26) aus in Ausnehmungen (25) des Backenträgers (21) eingesetzten, jeweils mittels eines an diesem abgestützten Gelenkbolzens (29) verschwenkbar gelagerten Grundbacken und an diesen auswechselbar befestigten Aufsatzbacken (28) bestehen.

7. Wellenspannfutter nach Anspruch 6,
**dadurch gekennzeichnet,**
**dass** an den freien Enden der Grundbacken (27) jeweils ein Gleitstück (43) verdrehbar angebracht ist, das mit einer oder zwei an dem Ringkolben (31) vorgesehenen Steuerkurven (41, 42) oder Schrägfläche zusammenwirkt.

8. Wellenspannfutter nach Anspruch 6 oder 7,
**dadurch gekennzeichnet,**
**dass** die Aufsatzbacken (28) an einer von der Stirnfläche der Grundbacken (27) abstehenden Schulter (30) abgestützt sind.

9. Wellenspannfutter nach einem oder mehreren der Ansprüche 6 bis 8,
**dadurch gekennzeichnet,**
**dass** zur Rückführung der Spannbacken (26) in dem Backenträger (21) eine auf die Grundbacken (27) mit Abstand zu dem diese tragenden Gelenkbolzen (29) eingesetzte Druckfeder (46) einwirkt oder dass an dem Ringkolben (31) eine dem Gleitstück (43) zugeordnete Steuerkurve (42) oder Schrägfläche angearbeitet ist.

10. Wellenspannfutter nach einem oder mehreren der Ansprüche 6 bis 9,
**dadurch gekennzeichnet,**
**dass** die die Grundbacken (27) aufnehmenden Ausnehmungen (25) des Backenträgers (21) durch eine oder mehrere zwischen diesem und den Grundbacken (27) eingesetzte Dichtungen, z.B. in Form eines Faltenbalges (49), dicht verschlossen sind.

11. Wellenspannfutter nach einem oder mehreren der Ansprüche 1 bis 9,
**dadurch gekennzeichnet,**
**dass** der Backenträger (21) über mehrere vorgespannte Druckfedern (51) an dem mit der Werkzeugmaschine (2) verbundenen Gehäuse (11) abgestützt und durch die Kraft der Druckfedern (51) beim Auslösen eines Spannvorganges selbsttätig begrenzt verstellbar ist.

12. Wellenspannfutter nach einem oder mehreren der Ansprüche 1 bis 11,
**dadurch gekennzeichnet,**
**dass** zur selbsttätigen Rückführung des Backenträgers (21) beim Öffnen der Spannbacken (26) zwischen dem Ringkolben (31) und dem Backenträger (21) mehrere Druckfedern (54) eingesetzt sind, die an der den Spannbacken (26) zugewandten Führungsscheibe (35) des Ringkolbens (31) und dem Backenträger (21) abgestützt und in Spannstellung der Spannbacken (26) vorgespannt sind.

13. Wellenspannfutter nach einem oder mehreren der Ansprüche 1 bis 12,
**dadurch gekennzeichnet,**
**dass** der Ringkolben (31) bei dessen Rückführung vorzugsweise mit Hilfe eines radial gerichteten Stiftes (58) mit dem Backenträger (21) formschlüssig verbunden ist.

14. Wellenspannfutter nach einem oder mehreren der Ansprüche 1 bis 13,
**dadurch gekennzeichnet,**
**dass** der Ringkolben (31) drehfest an dem Backenträger (21) abgestützt ist.

15. Wellenspannfutter nach einem oder mehreren der Ansprüche 1 bis 14,
**dadurch gekennzeichnet,**
**dass** der Ringkolben (31) mittels des in den Backenträger (21) eingesetzten radial gerichteten Stiftes (58), der in eine in der der Servoeinrichtung (3) zugekehrten Führungsscheibe (40) eingearbeiteten Längsnut (59) eingreift, mit dem Backenträger (21) drehfest verbunden ist.

16. Wellenspannfutter nach einem oder mehreren der Ansprüche 1 bis 14,
**dadurch gekennzeichnet,**
**dass** der Ringkolben (31) durch das Zwischenglied (44), das in Führungsschlitzen (66) des Trägers (13) abgestützt ist, drehfest mit dem Gehäuse (11) verbunden ist.

17. Wellenspannfutter nach einem oder mehreren der Ansprüche 1 bis 16,
**dadurch gekennzeichnet,**
**dass** der Verstellweg des Backenträgers (21) durch an diesem und/oder dem feststehenden Gehäuse (11) angebrachte Anschläge (61, 62) begrenzt ist.

18. Wellenspannfutter nach einem oder mehreren der Ansprüche 1 bis 17,
**dadurch gekennzeichnet,**
**dass** der Verstellweg der auf den Ringkolben (31) einwirkenden Servoeinrichtung (3) jeweils durch einen Anschlag (63, 64) begrenzt ist.

19. Wellenspannfutter nach einem oder mehreren der Ansprüche 1 bis 18,
**dadurch gekennzeichnet,**
**dass** der Stirnmitnehmer (17) lageorientiert in dem Gehäuse (13) des Gehäuses (11) eingesetzt ist.

20. Wellenspannfutter nach einem oder mehreren der Ansprüche 1 bis 19,
**dadurch gekennzeichnet,**
**dass** der von dem Gehäuse (11) und dem Backenträger (21) eingeschlossene Innenraum (71) des Wellenspannfutters ganz oder teilweise mit Schmiermittel befüllt ist.
